Europäisches Patentamt

European Patent Office

Office européen des brevets

(19)

(11) Numéro de publication : **0 475 248 B1**

(12) **FASCICULE DE BREVET EUROPEEN**

(45) Date de publication du fascicule du brevet :
02.08.95 Bulletin 95/31

(51) Int. Cl.$^6$ : **H04Q 7/20,** H04B 7/26

(21) Numéro de dépôt : 91114837.7

(22) Date de dépôt : **03.09.91**

(54) **Dispositif de sélection de signaux de réception selon leur puissance.**

(30) Priorité : **03.09.90 FR 9010940**

(43) Date de publication de la demande :
**18.03.92 Bulletin 92/12**

(45) Mention de la délivrance du brevet :
**02.08.95 Bulletin 95/31**

(84) Etats contractants désignés :
**AT BE CH DE DK ES FR GB GR IT LI LU NL SE**

(56) Documents cités :
**EP-A- 0 209 185
EP-A- 0 241 954
EP-A- 0 322 061
ERICSSON REVIEW vol. 67, no. 2, 1990,
STOCKHOLM (SE) pages 92 - 99; F.LINDELL
ET AL: 'Introduction of Digital Cellular Systems in North America'**

(73) Titulaire : **ALCATEL MOBILE
COMMUNICATION FRANCE
15, rue de la Baume
F-75008 Paris (FR)**

(72) Inventeur : **Abdesselem, Ouélid
5, rue Antoine Bourdelle
F-75015 Paris (FR)**
Inventeur : **Desperben, Lydie
10, rue Charles Chefson
F-92270 Bois Colombes (FR)**
Inventeur : **Popu, Marie-Pierre, c/o ALCATEL
RADIOTELEPHONE
Parc d'activités Kléber,
56, avenue Jean-Jaurès
F-92707 Colombes Cédex (FR)**

(74) Mandataire : **Weinmiller, Jürgen et al
Lennéstrasse 9
Postfach 24
D-82336 Feldafing (DE)**

EP 0 475 248 B1

## Description

Dispositif de sélection de signaux de réception selon leur puissance.

La présente invention concerne un dispositif de sélection de signaux de réception selon leur puissance, ces signaux étant identifiés par leur fréquence.

Dans le cadre du système de radiocommunication cellulaire numérique européen connu sous le nom de système GSM, des terminaux communiquent par voie radio avec des organes raccordés au réseau téléphonique appelés stations de base. Ce système prévoit 124 ondes porteuses de fréquences différentes au moyen desquels un terminal peut émettre et prévoit également 124 ondes porteuses de fréquences encore différentes qu'un terminal peut recevoir. Chaque onde porteuse a une structure temporelle formée d'une succession périodique de trames comportant chacune huit intervalles de temps de durée égale. Parmi les signaux de réception d'un terminal qui sont véhiculés par les ondes porteuses qu'il reçoit, un signal particulier, le signal de diffusion, porte toutes les informations permettant à ce terminal d'entrer en communication avec la station de base qui l'émet.

Le terminal doit identifier le signal qu'il reçoit avec la plus forte puissance car il s'agit très probablement du signal de diffusion émis par la station de base à laquelle il doit se connecter, ce qui sera explicité par la suite.

De plus, le système GSM, de par son mode de fonctionnement, impose à un terminal de mémoriser l'identification et la puissance des signaux de réception les plus puissants. Certains terminaux étant mobiles, il prescrit également que la valeur de la puissance d'un signal de réception doit résulter d'une moyenne de plusieurs mesures, 8 par exemple, espacées dans le temps d'une certaine période, 10 milisecondes par exemple, ceci afin de pondérer les variations de puissance à la réception dûes aux conditions de propagation. En effet, un signal de réception est la somme de plusieurs signaux empruntant des trajets différents, ces derniers signaux, selon la position du terminal mobile, apportant une contribution positive ou négative à la puissance de réception.

Une solution suggérée par les spécifications du système GSM consiste à prévoir des moyens d'analyse pour sélectionner durant une période de mesure un intervalle de temps de chaque signal de réception, ceci au rythme d'apparition des trames (v. aussi EP-A-209185). Cette opération est répétée sans interruption jusqu'à obtention du nombre de mesures souhaités. A la suite des moyens d'analyse sont disposés des moyens de mesure de puissance qui produisent la valeur de puissance d'un signal comme la moyenne des mesures faites sur les différents intervalles de temps sélectionnés. L'identité et la puissance des signaux sélectionnés sont fournis par des moyens de classement qui accèdent aux différentes valeurs établies par les moyens de mesure de puissance.

Cette solution requiert un temps important pour identifier le signal de diffusion intéressant, c'est-à-dire pour établir la communication, ce qui n'est pas souhaitable notamment du point de vue de l'utilisateur du terminal. En outre, les différentes mesures sont effectuées sur des intervalles de temps occupant la même position dans chacune des trames successives, ce qui n'est pas souhaitable pour une bonne discrimination du signal de diffusion. En effet les stations de base émettent ce signal de diffusion en permanence à la puissance maximale, tandis que dans la plupart des cas elles émettent les autres signaux à une puissance qui varie selon les intervalles de temps, cette puissance étant notamment ajustée en fonction de la distance du terminal destinataire d'un tel signal qui reçoit toujours le même intervalle de temps. Ainsi la puissance moyenne calculée sur plusieurs intervalles de temps distincts pour un signal qui n'est pas le signal de diffusion d'une station de base, présente une probabilité plus importante d'être inférieure à celle du signal de diffusion de cette station de base que si elle était calulée sur des intervalles de temps occupant la même position.

L'objet de la présente invention est donc la réalisation d'un dispositif de sélection de signaux de réception selon leur puissance pour lequel le temps de sélection est réduit et dans lequel les mesures de puissance d'un signal sont effectuées dans des intervalles de temps distincts.

L'invention propose de plus des moyens additionnels pour réduire davantage ce temps de sélection lorsque les puissances des différents signaux de réception sont très dispersées.

Elle s'applique quel que soit le type de sélection envisagé, qu'il s'agisse d'identifier les signaux les mieux reçus en nombre déterminé ou par rapport à un seuil déterminé.

L'invention est présentée en rapport avec le système de radiocommunication cellulaire numérique européen de manière à exposer clairement le concept inventif à partir d'un cas concret. Elle ne se limite pas à ce domaine d'application mais s'applique à chaque fois qu'il s'agit d'effectuer la sélection de signaux selon leur puissance dès lors que ceux-ci sont structurés en trames composées d'intervalle de temps.

Le dispositif de sélection de signaux de réception selon leur puissance selon l'invention s'applique lorsque ces signaux de réception identifiés par leurs fréquences sont structurés en trames composées d'un nombre p d'intervalles de temps. Il comprend des moyens d'analyse prévus pour, au cours de périodes d'analyse répétitives, sélectionner successivement au moins un intervalle de temps de signaux sondés choisis parmi les signaux de réception dans un ordre déterminé, la fréquence d'apparition des intervalles de temps sélectionnés correspondant à un nombre r d'intervalles de temps, comprend également des moyens de mesure de puissance pour produire la puissance de chacun des signaux sondés à partir de mesures effectués sur plusieurs intervalles de temps sélectionnés leur correspondant, des moyens de classement pour produire l'identité des signaux sélectionnés comme les signaux sondés qui présentent la plus forte puissance, et se caractérise en ce qu'il comprend des moyens pour que l'intervalle de temps sélectionné du premier signal sondé d'une période d'analyse de rang inférieur ou égal à p occupe une position dans la trame différente de celles qu'il occupait lors des périodes d'analyse précédentes.

De plus, dans le dispositif de sélection de signaux de réception selon leur puissance, les périodes d'analyse ayant une durée constante qui est égale au produit de la durée d'un intervalle de temps, du nombre r et d'un nombre n, le nombre c de positions possibles des intervalles de temps sélectionnés au sein d'une trame étant égal au rapport du nombre p et du plus grand commun diviseur de ce nombre p et du nombre r, le nombre n est choisi pour être premier avec le nombre c.

Avantageusement, dans le dispositif de sélection de signaux de réception selon leur puissance, les nombres r et p sont premiers entre eux.

En outre, dans le dispositif de sélection de signaux de réception selon leur puissance, le nombre n est égal au nombre des signaux sondés.

Par ailleurs, le dispositif de sélection de signaux de réception selon leur puissance produit également la puissance desdits signaux sélectionnés.

Dans un premier mode de réalisation du dispositif de sélection de signaux de réception selon leur puissance, l'ensemble des signaux de réception est inclus dans l'ensemble des signaux sondés.

Dans un deuxième mode de réalisation du dispositif de sélection de signaux de réception selon leur puissance, la sélection étant faite en deux étapes au moins, les moyens de commande produisent au cours de chacune de ces étapes l'identité et la puissance de signaux intermédiaires obtenues par sélection des signaux sondés, l'ensemble des signaux sondés au cours de la première étape incluant l'ensemble des signaux de réception, et les signaux intermédiaires au cours de la dernière étape étant les signaux sélectionnés, les signaux sondés au cours d'une autre étape étant les signaux intermédiaires produits au cours de l'étape précédente.

De plus, dans le dispositif de sélection de signaux de réception selon leur puissance, la puissance des signaux sélectionnés est obtenue à partir des mesures faites sur la totalité des intervalles de temps sélectionnés de ces signaux apparus au cours des différentes étapes.

Le dispositif de sélection de signaux de réception selon leur puissance trouvera une application avantageuse dans le système deradiocommunication cellulaire numérique européen, les signaux de réception étant au nombre de 124, les nombres p, r, n valant respectivement 8, 3 et 125.

Les différents objets et caractéristiques de la présente invention apparaîtront de manière plus précise dans le cadre de la description d'exemples de réalisation donnés à titre non limitatif.

Les moyens d'analyse sont prévus pour recevoir la totalité des signaux de réception présentant chacun une fréquence distincte et pour sélectionner successivement un intervalle de temps de chacun de ces signaux figurant dans une table des signaux sondés. Ils comprennent généralement un synthétiseur de fréquence dont la fréquence de sortie correspond à celle du signal qu'il s'agit de sonder et qui est prévu pour que la fréquence d'apparition des intervalles de temps sélectionnés corresponde à un nombre r d'intervalles de temps. Compte-tenu des contraintes de temps de commutation de la fréquence de sortie de ce synthétiseur, r sera choisi égal à 3 dans la suite de la description. De plus, r est ainsi premier avec le nombre p d'intervalles de temps composant une trame, soit 8 dans le cas présent, ce qui a pour conséquence que p intervalles de temps sélectionnés successifs aient chacun une position différente dans une trame.

De manière générale l'invention s'applique quel que soit le nombre r et quel que soit le nombre c de positions possibles des intervalles de temps sélectionnés au sein d'une trame, ce nombre étant égal au rapport de p et du plus grand commun diviseur de p et de r.

Les moyens d'analyse sont commandés périodiquement selon une période d'analyse au cours de laquelle ils produisent un intervalle de temps de chacun des signaux figurant dans la table des signaux sondées. La durée d'une période d'analyse sera choisie comme un multiple de r, c'est-à-dire qu'elle vaut n.r intervalles de temps où n est un nombre entier. Le nombre de périodes d'analyses successives définit le nombre de mesures à partir desquelles seront calculées les puissances des différents signaux.

Si $S_1$ représente la position dans la trame dont il est issu d'un intervalle de temps sélectionné de l'un quelconque des signaux de la table des signaux sondés, au cours d'une période d'analyse et si $S_2$ est la position de l'intervalle de temps sélectionné de ce même signal au cours de la période d'analyse suivante, alors $S_2 - S_1 = n.r$ [p] ou [p] signifie que le résultat de la soustraction est pris modulo p.

Dans l'exemple numérique adopté si cette table comprend tous les signaux de réception qui sont au nombre de 124 et si n vaut également 124 :

$$S_2 - S_1 = 124.3 \quad [8]$$

$$S_2 - S_1 = 4$$

Il s'ensuit que les positions des intervalles de temps sélectionnés au cours de périodes d'analyse de rang impair seront égales à $S_2$, tandis que celles correspondant en périodes d'analyse de rang impair seront égales à $S_1$. Quel que soit le nombre de périodes d'analyse, seuls deux positions d'intervalles de temps seront considérées.

Afin d'augmenter ce nombre de positions, il est possible de modifier le nombre n.

En se plaçant dans l'hypothèse où le nombre de mesures est égal au nombre d'intervalles de temps par trame, la solution idéale consiste à prévoir les moyens d'analyse de sorte que les différents intervalles de temps sélectionnés d'un même signal occupent toutes les positions possibles dans la trame. En admettant toujours que p et r sont premiers, il suffit de choisir le nombre n premier avec p. En effet, soit k un nombre tel qu'un intervalle de temps sélectionné d'un signal donné occupe la même position au cours d'une période d'analyse et au cours de la nième période suivante, ces précisions ayant une durée de n.r intervalles de temps :

$$(n.r) . k = k'.p$$

où k' est un nombre entier quelconque. Il s'agit de chercher la plus petite valeur de k satisfaisant à cette équation.

$$n.(r.k) = k'.p$$

n et p étant premiers, il s'ensuit que :

r.k = $\alpha$·p et k' = $\alpha$ .n ou $\alpha$ est un nombre entier quelconque.

r et p étant premiers, il s'ensuit que :

$$k = p \text{ et } \alpha = r$$

Ainsi la plus petite valeur de k est p ce qui signifie bien que au cours de p périodes d'analyse successives un signal sondé et analysé sur tous les intervalles de temps. On démontre, de manière analogue, que ce n'est pas le cas si n et p ne sont pas premiers.

On généralise également la démonstration au cas où p et r ne sont pas premiers. En effet tout se passe comme si il y avait une trame de c intervalles de temps, r prenant dans ce cas la valeur 1 et étant donc premier avec c. On choisira donc n premier avec c pour obtenir toutes les positions possibles d'intervalles de temps sélectionnés.

Dans l'exemple numérique choisi r et p étant premiers, si n est choisi égal au nombre de signaux de réception, soit 124, n et p ne sont pas premiers. Il suffit dans ce cas de fixer la valeur de n à 125.

Le module de mesure est donc prévu pour recevoir les signaux de réception et pour produire l'identité et la puissance des signaux sélectionnés. Des moyens de commande fournissent à ce module la table des signaux sondés, le nombre de mesure à effectuer pour chaque signal et le nombre de signaux à sélectionner comme étant les plus puissants.

En dehors de l'invention, la période d'analyse vaut un nombre d'intervalles de temps qui est le produit du nombre de signaux de sélection et du nombre r.

L'invention prévoit de modifier cette période d'analyse.

Dans un mode de réalisation avantageux donné à titre d'exemple, cette période d'analyse correspond au produit du nombre de signaux sondés et du nombre r. Les moyens de commande produisent la table des signaux sondés de manière que le nombre de ces signaux soit premier avec le nombre c.

Elle rajoute donc dans cette table à la totalité des signaux de réception un nombre de signaux qui permette de satisfaire cette condition, une solution avantageuse consistant à dupliquer l'un au moins de ces signaux de réception. Dans l'exemple numérique adopté, pour obtenir n = 125, il suffit donc de dupliquer un signal de réception.

Les moyens de mesure de puissance, dans ce cas, produiront deux valeurs de puissance pour un seul signal. Une première possibilité consiste à ne pas tenir compte de l'une de ces deux valeurs qui ne sera pas transmise aux moyens de classement. Une deuxième possibilité consiste à faire la moyenne de ces deux valeurs qui sera transmise aux moyens de classement.

Il est possible de prévoir un autre mode de réalisation dans lequel la période d'analyse a une durée plus importante que celle nécessaire à l'analyse des signaux de réception, une partie de cette période étant alors un temps mort.

Une caractéristique additionnelle de l'invention intéresse le cas où les signaux de réception ont des puissance qui présentent une grande dispersion, c'est-à-dire lorsqu'elles sont réparties entre une puissance minimale et une puissance maximale très différentes. C'est précisément la situation qui s'applique dans le cadre du système GSM : sur les 124 signaux reçus la plupart d'entre eux présentent une puissance inférieure d'au moins 10 décibels à celle des 16 signaux les mieux reçus.

Le classement peut alors être effectué en deux étapes :

- lors de la première étape, les moyens de commande, comme précédemment, produisent la table des signaux sondés avec les signaux de réception dont l'un d'entre eux est dupliqué, produisent une première valeur M1 du nombre de mesures à effectuer 4, par exemple, et un premier nombre de signaux à sélectionner, 33 par exemple, et reçoivent une première table de sélection associant l'identité et la puissance des 33 signaux les mieux reçus,

- lors de la deuxième étape, les moyens de commande produisent la table des signaux sondés à partir des signaux de la table de sélection précédemment établie, produisent une deuxième valeur M2 du nombre de mesures à effectuer, 6, par exemple, et un deuxième nombre de signaux à sélectionner, 16 dans l'exemple choisi, les moyens de mesure de puissance établissant dans ce cas les valeurs de puissance des 33 signaux figurant dans la table de sélection en faisant la moyenne des M1, mesures de la première étape et des M2 mesures de la seconde étape, permettant ainsi de produire la table de sélection pour les 16 signaux les mieux reçus.

Cette disposition permet de réduire significativement le temps total de traitement. Pour un nombre total de mesures égal à 10 :

- sans cette disposition, ce temps de traitement est égal au produit du nombre de signaux sondés (125), du nombre de mesures (10), du nombre r ( 3) et d'un intervalle de temps (0,577ms) soit environ 2160 ms

- avec cette disposition, le temps de traitement total est la somme du temps de traitement de la première et de la deuxième étape :

$$125 \times 4 \times 3 \times 0,577 + 33 \times 6 \times 3 \times 0,577$$
soit environ 1200 ms.

Le nombre d'étapes qui a été fixé à deux peut évidemment prendre d'autres valeurs sans sortir du cadre de l'invention. Les modifications à apporter si l'on souhaite augmenter ce nombre sont à la portée de l'homme de l'art. Elles consistent simplement, pour une étape intermédiaire, à produire la table des signaux sondés à partir de la table de sélection de l'étape précédente.

## Revendications

1. Dispositif de sélection de signaux de réception selon leur puissance, ces signaux de réception identifiés par leurs fréquences étant structurés en trames composées d'un nombre p d'intervalles de temps, comprenant des moyens d'analyse prévus pour, au cours de périodes d'analyse répétitives, sélectionner successivement au moins un intervalle de temps de signaux sondés choisis parmi lesdits signaux de réception dans un ordre déterminé, la fréquence d'apparition desdits intervalles de temps sélectionnés correspondant à un nombre r d'intervalles de temps, comprenant également des moyens de mesure de puissance pour produire la puissance de chacun desdits signaux sondés à partir de mesures effectués sur plusieurs intervalles de temps sélectionnés leur correspondant, des moyens de classement pour produire l'identité des signaux sélectionnés comme les signaux sondés qui présentent la plus forte puissance, caractérisé en ce qu'il comprend des moyens pour que l'intervalle de temps sélectionné du premier signal sondé d'une période d'analyse de rang inférieur ou égal à p occupe une position dans la trame différente de celles qu'il occupait lors des périodes d'analyse précédentes.

2. Dispositif de sélection de signaux de réception selon leur puissance selon la revendication 1, caractérisé en ce que lesdites périodes d'analyse ayant une durée constante qui est égale au produit de la durée d'un intervalle de temps, du nombre r et d'un nombre n, le nombre c de positions possibles desdits intervalles de temps sélectionnés au sein d'une trame étant égal au rapport du nombre p et du plus grand commun diviseur de ce nombre p et du nombre r, le nombre n est choisi pour être premier avec le nombre c.

3. Dispositif de sélection de signaux de réception selon leur puissance selon la revendication 1, caractérisé en ce que les nombres r et p sont premiers entre eux.

4. Dispositif de sélection de signaux de réception selon leur puissance selon la revendication 2 ou 3, caractérisé en ce que le nombre n est égal au nombre des signaux sondés.

5. Dispositif de sélection de signaux de réception selon leur puissance selon la revendication 4, caractérisé en ce qu'il produit également la puissance desdits signaux sélectionnés.

6. Dispositif de sélection de signaux de réception selon leur puissance selon l'une quelconque des revendications précédentes, caractérisé en ce que l'ensemble desdits signaux de réception est inclus dans l'ensemble desdits signaux sondés.

7. Dispositif de sélection de signaux de réception selon leur puissance selon l'une quelconque des revendications 1 à 5, caractérisé en ce que, la sélection étant faite en deux étapes au moins, lesdits moyens de commande produisent au cours de chacune desdites étapes l'identité et la puissance de signaux intermédiaires obtenues par sélection desdits signaux sondés, l'ensemble desdits signaux sondés au cours de la première étape incluant l'ensemble desdits signaux de réception, et lesdits signaux intermédiaires au cours de la dernière étape étant lesdits signaux sélectionnés, lesdits signaux sondés au cours d'une autre étape étant lesdits signaux intermédiaires produits au cours de l'étape précédente.

8. Dispositif de sélection de signaux de réception selon leur puissance selon la revendication 7, caractérisé en ce que la puissance desdits signaux sélectionnés est obtenue à partir des mesures faites sur la totalité desdits intervalles de temps sélectionnés de ces signaux apparus au cours des différentes étapes.

9. Dispositif de sélection de signaux de réception selon leur puissance selon l'une quelconque des revendications 6 à 8, caractérisé en ce qu'il est utilisé dans le système de radiocommunication cellulaire numérique européen, lesdits signaux de réception étant au nombre de 124, les nombres p, r, n valant respectivement 8, 3 et 125.

**Patentansprüche**

1. Vorrichtung zum Selektieren von Empfangssignalen nach ihrer Stärke, wobei die durch ihre Frequenzen identifizierten Empfangssignale in Rahmen strukturiert sind, die von einer Anzahl p von Zeitintervallen gebildet werden, und wobei die Vorrichtung Analysemittel aufweist, die im Laufe der sich wiederholenden Analyseperioden nacheinander mindestens ein Zeitintervall der sondierten Signale selektieren, die unter den Empfangssignalen in einer bestimmten Reihenfolge gewählt werden, wobei die Frequenz des Auftretens der selektierten Zeitintervalle einer Zahl r von Zeitintervallen entspricht, und wobei die Vorrichtung weiter Mittel zur Messung der Stärke jedes der sondierten Signale aufgrund von über mehrere ihnen entsprechende Zeitintervalle durchgeführten Messungen sowie Klassifizierungsmittel aufweist, um die Identität der Signale zu liefern, die als die sondierten Signale mit der größten Stärke selektiert wurden, dadurch gekennzeichnet, daß die Vorrichtung Mittel aufweist, die bewirken, daß das selektierte Zeitintervall des ersten sondierten Signals einer Analyseperiode mit dem Rang p oder darunter im Rahmen eine Position besitzt, die sich von denen unterscheidet, die das Intervall während der vorhergehenden Analyseperioden einnahm.

2. Vorrichtung zum Selektieren von Empfangssignalen nach ihrer Stärke nach Anspruch 1, dadurch gekennzeichnet, daß die Analyseperioden eine konstante Dauer besitzen, die dem Produkt aus der Dauer eines Zeitintervalls, der Zahl r und einer Zahl n entspricht, wobei die Zahl c der möglichen Positionen der ausgewählten Zeitintervalle innerhalb eines Rahmens dem Verhältnis zwischen der Zahl p und dem größten gemeinsamen Teiler dieser Zahl p und der Zahl r entspricht, und wobei die Zahl n so gewählt ist, daß sie mit der Zahl c teilerfremd ist.

3. Vorrichtung zum Selektieren von Empfangssignalen nach ihrer Stärke gemäß Anspruch 1, dadurch gekennzeichnet, daß die Zahl r und die Zahl p untereinander teilerfremd sind.

4. Vorrichtung zum Selektieren von Empfangssignalen nach ihrer Stärke gemäß Anspruch 2 oder 3, dadurch gekennzeichnet, daß die Zahl n der Zahl der sondierten Signale entspricht.

5. Vorrichtung zum Selektieren von Empfangssignalen nach ihrer Stärke gemäß Anspruch 4, dadurch gekennzeichnet, daß sie auch die Stärke der selektierten Signale liefert.

6. Vorrichtung zum Selektieren von Empfangssignalen nach ihrer Stärke gemäß einem beliebigen der vorhergehenden Ansprüche, dadurch gekennzeichnet, daß die Gesamtheit der Empfangssignale in der Gesamtheit der sondierten Signale enthalten ist.

7. Vorrichtung zum Selektieren von Empfangssignalen nach ihrer Stärke gemäß einem beliebigen der Ansprüche 1 bis 5, dadurch gekennzeichnet, daß die Selektion in mindestens zwei Schritten erfolgt, wobei die genannten Steuermittel im Laufe jedes dieser Schritte die Identität und die Stärke von Zwischensignale liefert, die durch Selektieren der sondierten Signale erhalten werden, wobei die Gesamtheit der sondierten Signale im Laufe des ersten Schritts die Gesamtheit der Empfangssignale umfaßt, während die Zwischensignale im Verlauf des letzten Schritts die selektierten Signale sind, wobei die im Verlauf eines weiteren Schritts sondierten Signale die im Verlauf des vorhergehenden Schritts gelieferten Zwischensignale sind.

8. Vorrichtung zum Selektieren von Empfangssignalen nach ihrer Stärke gemäß Anspruch 7, dadurch gekennzeichnet, daß die Stärke der selektierten Signale aufgrund der Messungen erhalten wird, die über die Gesamtheit der selektierten Zeitintervalle dieser im Verlauf der verschiedenen Schritte aufgetretenen Signale durchgeführt werden.

9. Vorrichtung zum Selektieren von Empfangssignalen nach ihrer Stärke gemäß einem beliebigen der Ansprüche 6 bis 8, dadurch gekennzeichnet, daß sie im europäischen digitalen Mobilfunkzellennetz verwendet wird, wobei 124 Empfangssignale vorhanden sind und für die Zahlen p, r, n die Zahlenwerte 8 bzw. 3 bzw. 125 gewählt sind.

**Claims**

1. A device for selecting receive signals as a function of their power, said receive signals being identified by their frequency and being structured into frames made up by a number $p$ of time slots, including analysis means providing during repetitive analysis periods, successive selection of at least one time slot of polled signals selected from among said receive signals in a determined order, the frequency of appearance of said selected time slots corresponding to a number $r$ of time slots, said device further including power measuring means for producing the power of each one of said polled signals using as a basis measurements carried out on several selected time slots that correspond thereto, classification means for producing the identity of the selected signals in the form of polled signals having the highest power, characterised in that it further includes means whereby the selected time slot of the first signal polled during an analysis period of rank less than or equal to $p$ occupies a different position in the frame from the positions that it occupied during preceding analysis periods.

2. Device for selecting receive signals as a function of their power according to claim 1 characterised in that, with said analysis periods having a constant duration which is equal to the product of the duration of a time slot, of the number $r$ and of a number $n$, and with the number $c$ of possible positions of said selected time slots within a frame being equal to the ratio between the number $p$ and highest common factor of this number $p$ and of the number $r$, the number $n$ is selected to have no common factor with the number $c$.

3. Device for selecting receive signals as a function of their power according to claim 1 characterised in that the numbers $r$ and $p$ have no common factor.

4. Device for selecting receive signals as a function of their power according to claim 2 or claim 3 characterised in that the number $n$ is equal to the number of signals polled.

5. Device for selecting receive signals as a function of their power according to claim 4 characterised in that it also produces the power of said selected signals.

6. Device for selecting receive signals as a function of their power according to any one of the preceding claims characterised in that the set of said receive signals is included in the set of said polled signals.

7. Device for selecting receive signals as a function of their power according to any one of claims 1 to 5 characterised in that, with selection being carried out in two steps at least, control means produce during each one of said steps, the identity and the power of intermediate signals obtained by selecting said polled signals, the set of said signals polled during the first step including the set of said receive signals, and said intermediate signals, during the last step, being said selected signals, said signals polled during another step being said intermediate signals produced during the preceding step.

8. Device for selecting receive signals as a function of their power according to claim 7 characterised in that the power of said selected signals is obtained on the basis of measurements carried out on all of the said selected time slots for the said signals that have appeared during the various steps.

9. Device for selecting receive signals as a function of their power according to any one of claims 6 to 8, characterised in that it is employed in the Pan European Digital Cellular Mobile Radio system, said receive signals being 124 in number, the numbers $p$, $r$, $n$ being respectively equal to 8, 3 and 125.